# EUROPEAN PATENT SPECIFICATION

(11) **EP 3 450 699 B1**
(45) Date of publication and mention of the grant of the patent: **03.02.2021**
(21) Application number: 18189087.2
(22) Date of filing: 15.08.2018
(51) Int. Cl.: F01D 11/08, C04B 35/80, B32B 18/00

(54) **CERAMIC MATRIX COMPOSITE BLADE TRACK FOR A GAS TURBINE ENGINE AND METHOD OF MAKING THE SAME**
SCHAUFELBAHN AUS KERAMISCHEM MATRIXVERBUNDWERKSTOFF FÜR EIN GASTURBINENTRIEBWERK UND DEREN HERSTELLUNGSVERFAHREN
PISTE D'AUBE EN COMPOSITE À MATRICE CÉRAMIQUE POUR UN MOTEUR À TURBINE À GAZ ET SON PROCÉDÉ DE FABRICATION

(30) Priority: 01.09.2017 US 201762553459 P
(43) Date of publication of application: 06.03.2019
(73) Proprietor: Rolls-Royce Corporation, Indianapolis, Indiana 46225 (US); Rolls-Royce North American Technologies, Inc., Indianapolis, IN 46241 (US)
(72) Inventor: Sippel, Aaron, Zionsville, IN Indiana 46077 (US); Varney, Bruce, Greenwood, IN Indiana 46142 (US); Freeman, Ted, Danville, IN Indiana 46122 (US); Holley, Kevin, Danville, IN Indiana 46122 (US)
(74) Representative: Rolls-Royce plc

(56) References cited:
- EP-A1- 3 088 690
- EP-A1- 3 095 961
- US-A1- 2016 245 102
- US-A1- 2016 245 108

## Description

### FIELD OF THE INVENTION

The present disclosure relates generally to components used in a gas turbine engine, and more specifically to components that include ceramic matrix composite materials.

### BACKGROUND

Gas turbine engines are used to power aircraft, watercraft, power generators, and the like. Gas turbine engines typically include a compressor, a combustor, and a turbine. The compressor compresses air drawn into the engine and delivers high pressure air to the combustor. In the combustor, fuel is mixed with the high pressure air and is ignited. Products of the combustion reaction in the combustor are directed into the turbine where work is extracted to drive the compressor and, sometimes, an output shaft. Left-over products of the combustion are exhausted out of the turbine and may provide thrust in some applications.

Compressors and turbines typically include alternating stages of static vane assemblies and rotating wheel assemblies. The rotating wheel assemblies include disks carrying blades around their outer edges. When the rotating wheel assemblies turn, tips of the blades move along blade tracks included in static shrouds that are arranged around the rotating wheel assemblies.

Some shrouds positioned in the turbine may be exposed to high temperatures from products of the combustion reaction in the combustor. Such shrouds sometimes include components made from ceramic matrix composite materials suited for use in high temperature environments. Blade tracks are known from e.g. EP3088690 that describes a full hoop blade track with flanged segments, EP3095961 which describes a brazed blade track, US2016/0245102 providing CMC track segments located circumferentially adjacent to one another to form a track ring and US2016/0245108 that describes overlapping segments in a seal.

### SUMMARY OF THE INVENTION

According to the present invention a blade track for use in a gas turbine engine according to claim 1 and a method of making a blade track for a gas turbine engine according to claim 11 are provided. The present disclosure may comprise one or more of the following features and combinations thereof.

According to the present disclosure, a blade track for use in a gas turbine engine includes a first segment comprising ceramic-matrix composite materials and a second segment comprising ceramic-matrix composite materials. The first segment includes a first band shaped to extend part-way around a central axis, a first finger support that extends partway around the central axis from a circumferential end of the first band, and a first attachment finger that extends from an end of the first finger support. The second segment includes a band shaped to extend part-way around the central axis a finger support that extends partway around the central axis from a circumferential end of the band, and a second attachment finger that extends from an end of the finger support wherein the first attachment finger extends from the first finger support in an axial direction and the second attachment finger extends from the second finger support in an axial direction opposite the first attachment finger. The first attachment finger and the second attachment finger combine to provide an interlocked joint between the first segment and the second segment, wherein the second band, the second finger support, and the second finger form a second finger-receiving space between the circumferential end of the second band and the second finger. The first finger extends into the second finger-receiving space formed in the second segment and the second finger extends into the first finger-receiving space formed in the first segment.

In some embodiments, the first finger support extends from the circumferential end of the first band and the second finger support extends from the circumferential end of the second band opposite the first finger support. The first band, the first finger support, and the first finger form a first finger-receiving space between the circumferential end of the first band and the first finger.

In some embodiments, In some embodiments, the first band and the second band have a thickness that is about equal to a thickness of the first finger and the second finger.

In some embodiments, the first segment further includes a third attachment finger that extends from the first finger support in the axial direction and the first and third fingers cooperate with the first finger support to form a first finger-receiving space and a second finger-receiving space. The first attachment finger is positioned radially below the first finger-receiving space and is spaced apart circumferentially from the circumferential end of the first band and the third attachment finger is positioned radially above the third finger-receiving space and is adjacent the circumferential end of the first band. The second segment further includes a fourth attachment finger that extends from the second finger support in the axial direction and the second and fourth fingers cooperate with the second finger support to form a third finger-receiving space and a fourth finger-receiving space. The second attachment finger is positioned radially below the third finger-receiving space and is spaced apart circumferentially from the circumferential end of the second band and the fourth attachment finger is positioned radially above the fourth finger-receiving space and is adjacent the circumferential end of the second band.

In some embodiments, the first segment is configured to bond to the second segment such that the first attachment finger is extends into the fourth finger-receiving space, the second attachment extends into the second finger-receiving space, the third attachment finger extends into the third finger-receiving space, and the fourth attachment finger extends into the first finger-receiving space. The first band and the second band have a first thickness and each of the fingers has a second thickness and the second thickness may be less than the first thickness. The second thickness may be about half of the second thickness.

In some embodiments, the blade track includes at least one mount pin that extends through the first and second attachment fingers. The at least one mount pin may include a first mount pin that extends in the radial direction from the first attachment finger into the fourth attachment finger and a second mount pin that extends in the radial direction from the second attachment finger into the third attachment finger. The at least one mount pin may include a first mount pin that extends in the axial direction from the first finger support to the second finger support through one of the first and fourth attachment fingers and a second mount pin that extends in the axial direction from the first finger support to the second finger support through one of the second and the third attachment fingers.

In some embodiments, the ceramic matrix composite materials includes reinforcement-preform fibers suspended in a ceramics material matrix. The reinforcement-preform fibers may be oriented primarily in the circumferential and axial directions.

According to another aspect of the present disclosure, a method of making the blade track for a gas turbine engine is described. The method may include providing a first blade track segment having a band, a finger support and a finger and a second blade track segment having a band, a finger support and a finger. The method may also include chemical vapor infiltrating the first blade track segment and the second blade track segment to partially densify the first blade track segment and the second blade track segment.

The method may include assembling the blade track by inserting the first finger formed on the first blade track segment into a first finger-receiving space formed in the second blade track segment and inserting the second finger formed on the second blade track segment into a second finger-receiving space formed in the first blade track segment to interlock the first blade track segment and the second blade track segment. The method may also include slurry melt infiltrating the first blade track segment and the second blade track segment to bond the first blade track segment and the second blade track segment. In some embodiments, the method may include machining the finger supports and the fingers into the first blade track segment and the second blade track segment to form the finger-receiving spaces in the first and second blade track segments.

These and other features of the present disclosure will become more apparent from the following description of the illustrative embodiments.

### BRIEF DESCRIPTION OF THE DRAWINGS

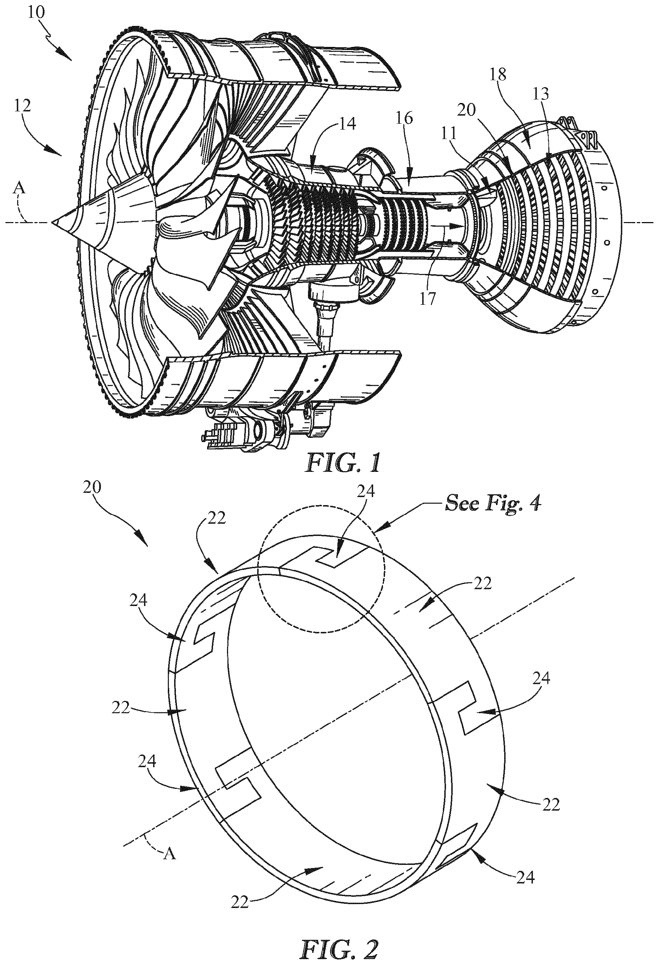

Fig. 1 is a cut-away perspective view of a gas turbine engine showing that the exemplary engine includes a fan driven by an engine core having a compressor, a combustor, and a turbine including a blade track further illustrated in Fig. 2;
Fig. 2 is a perspective view of a full-hoop blade track for use in the gas turbine engine of Fig. 1 showing that the full-hoop blade track includes a plurality of blade track segments and showing that the blade track segments interlock to form the full-hoop blade track;

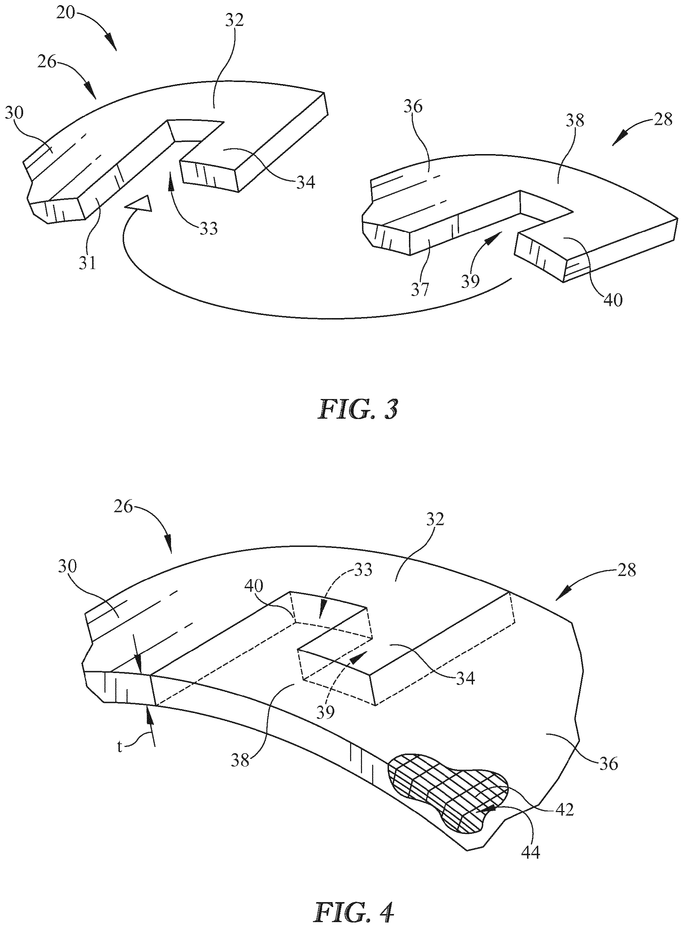

Fig. 3 is an exploded assembly view of portion of the full-hoop blade track of Fig. 2 showing that the full-hoop blade track includes a first segment and a second segment and showing that each segment includes a band, a finger support that extends from a circumferential end of the band, and an attachment finger that extends from the finger supports in the axial direction and suggesting that the first and second segment are joined together by interlocking the attachment fingers as shown in Fig. 4;
Fig. 4 is perspective view of the first and second segments from Fig. 3 showing that the first and second segments are joined together such that the fingers of each segment are received within complementary finger-receiving spaces formed by each of the segments to form a joint and discourage movement of the segments relative to one another in the circumferential and axial directions;

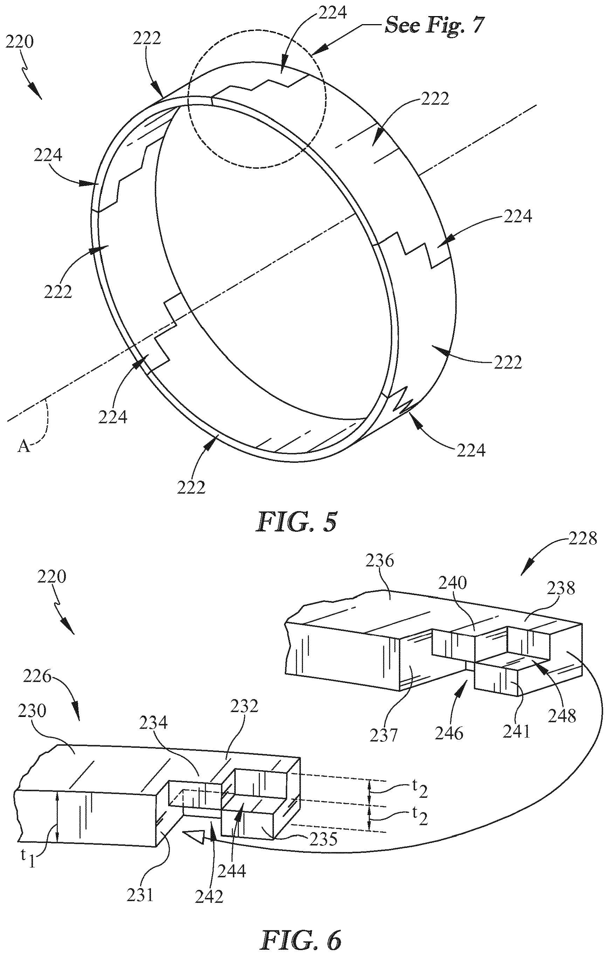

Fig. 5 is a perspective view of another full-hoop blade track in accordance with the present disclosure showing that the full-hoop blade track includes a plurality of blade track segments and showing that the blade track segments interlock to form the full-hoop blade track;

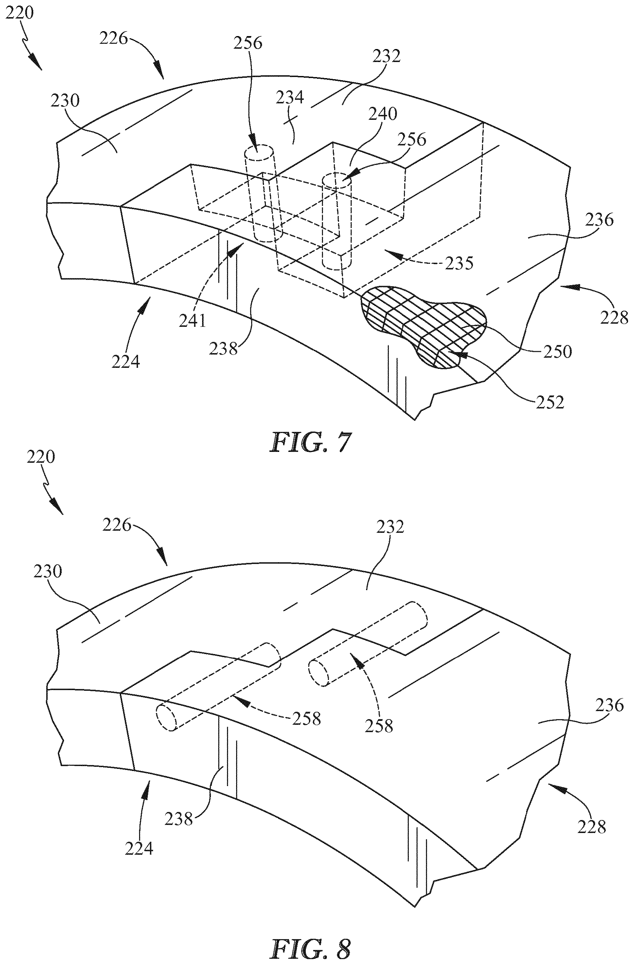

Fig. 6 is an exploded assembly view of portion of the full-hoop blade track of Fig. 5 showing that the full-hoop blade track includes a first segment and a second segment and showing that each segment includes a band, a finger support that extends from a circumferential end of the band, and multiple attachment fingers extending from the finger supports in the axial direction and suggesting that the first and second segment are joined together by interlocking the attachment fingers as shown in Fig. 7;
Fig. 7 is perspective view of the first and second segments from Fig. 6 showing that the first and second segments are joined together such that the fingers of each segment are received within complementary finger-receiving spaces formed by each of the segments to form a joint and discourage movement of the segments relative to one another in the circumferential, axial, and radial directions and showing that the full-hoop blade track further may further include a plurality of reinforcement pins that extend radially between complementary attachment fingers to reinforce the joint;
Fig. 8 is a perspective view similar to Fig. 7 showing that the full-hoop blade track may further include a plurality of reinforcement pins that extend axially between complementary attachment fingers to reinforce the joint; and

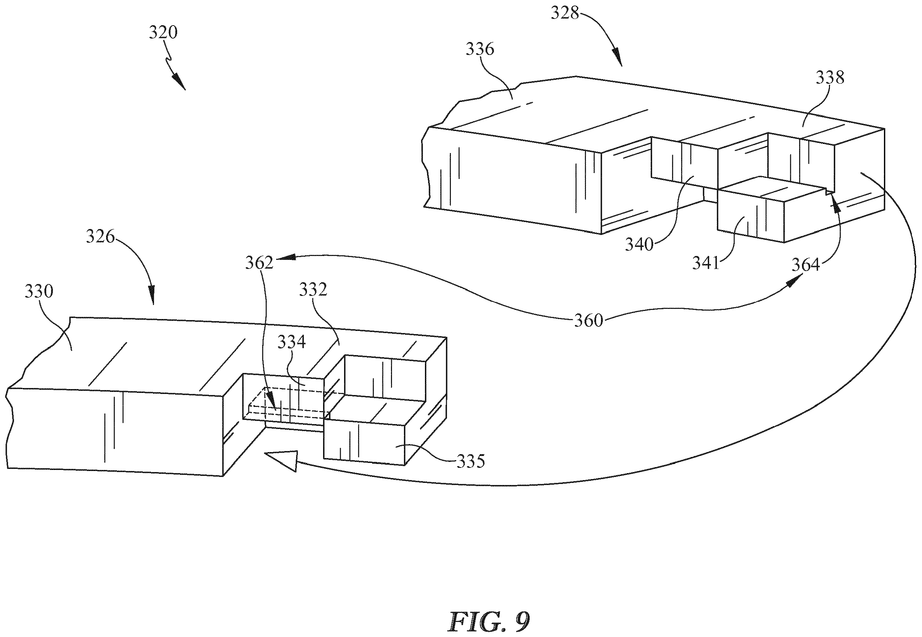

Fig. 9 is a perspective view of another blade track in accordance with the present disclosure similar to the blade track in Fig. 6 showing that the blade track includes a locking feature formed on the attachment fingers, the locking feature including a locking tab extending from one of the attachment fingers of the first segment and suggesting that the locking tab is sized to be received within a locking notch formed in a complementary attachment finger of the second segment.

### DETAILED DESCRIPTION

For the purposes of promoting an understanding of the principles of the disclosure, reference will now be made to a number of illustrative embodiments illustrated in the drawings and specific language will be used to describe the same.

An illustrative aerospace gas turbine engine 10 includes a fan 12, a compressor 14, a combustor 16, and a turbine 18 as shown in Fig. 1. The fan 12 is driven by the turbine 18 and provides thrust for propelling an air vehicle. The compressor 14 compresses and delivers air to the combustor 16. The combustor 16 mixes fuel with the compressed air received from the compressor 14 and ignites the fuel. The hot, high-pressure products of the combustion reaction in the combustor 16 are directed into the turbine 18 to cause the turbine 18 to rotate about a central axis A and drive the compressor 14 and the fan 12.

The turbine 18 includes at least one turbine wheel assembly 11 and a blade track 20 positioned to surround the turbine wheel assembly 11 as shown in Figs. 1 and 2. The turbine wheel assembly 11 includes a plurality of blades 13 coupled to a rotor disk for rotation therewith. The hot, high pressure combustion products from the combustor 16 are directed toward the blades 13 of the turbine wheel assembly 11 along a flow path 17. The blades 13 are in turn pushed by the combustion products to cause the turbine wheel assembly 11 to rotate. In turn, the turbine wheel assembly 11 drives rotating components of the compressor 14 and/or the fan 12.

Blade track 20 extends around the turbine wheel assembly 11 to block combustion products from passing over the blades 13 through a gap without pushing the blades 13 to rotate. Blade track 20 is made from ceramic matrix composite materials, such as, for example silicon-carbide fibers suspended in a silicon-carbide matrix. However, any suitable ceramic-containing composition may be used depending on application.

A first embodiment of blade track 20, in accordance with the present disclosure is shown in Figs. 2-4. Blade track 20 comprises a plurality of blade track segments 22 and a plurality of interlocked joints 24 as shown in Fig. 2. Blade track segments 22 are arcuate and are formed to extend circumferentially around the central axis A and are integrated with one another via matrix material so as to form a full-hoop. The interlocked joints 24 are formed to receive at least a portion of adjacent blade track segments 22 to couple blade track segments 22 together and form a full-hoop blade track 20.

As shown in Fig. 3, the blade track 20 includes a first blade track segment 26 and a second blade track segment 28. The first segment 26 and the second segment 28 are made from ceramic matrix composite materials and are shaped to extend at least partway around central axis A. The first segment 26 and the second segment 28 are sized and shaped to interlock with one another and form the interlocked joint 24 as suggested in Fig. 3 and shown in Fig. 4.

The first segment and the second segment 28 interlock and form the interlocked joint 24 to block movement of the first segment 26 in circumferential and axial directions relative to the second segment 28. The first segment 26 includes a band 30, a finger support 32, and an attachment finger 34 as shown in Figs. 3 and 4. The band 30 extends partway around the central axis A and interfaces with turbine blades (not shown) rotating about central axis A. The finger support 32 is coupled to a circumferential end 31 of the band and extends in the circumferential direction toward the second segment 28. The finger 34 is coupled to the finger support 32 and extends in the axial direction.

The second segment 28 includes a band 36, a finger support 38, and an attachment finger 40 as shown in Figs. 3 and 4. The band 36 extends partway around the central axis A and interfaces with turbine blades (not shown) rotating about central axis A. The finger support 38 is coupled to a circumferential end 37 of the band and extends in the circumferential direction toward the first segment 26. The finger 40 is coupled to the finger support 32 and extends in the axial direction opposite the finger 34 of the first segment 26.

The first and second segments 26, 28 may be manufactured with respective bands 30, 36, finger supports 32, 38, and fingers 34, 40, or the bands 30, 36, finger supports 32, 38, and fingers 34, 40 may be machined into the first and second segments 26, 28. Each band 30, 36, finger support 32, 38, and finger 34, 40 has a thickness t that is continuous across the entire blade track 20 as shown in Fig. 4.

The first segment 26 complements the second segment 28 so that the first and second segments 26, 28 combine and interlock to block movement of the first and second segments 26, 28 in the circumferential and axial directions relative to one another. The first segment 26 is formed to include a finger-receiving space 33 as shown in Fig. 3. The finger-receiving space 33 is formed between the circumferential end 31 and the finger 34 of the first segment 26 so that the circumferential end 31 and the finger 34 are spaced apart from one another. The finger 40 of the second segment 28 is sized and shaped to interlock with first segment 26 so that the finger 40 extends into and fills the finger-receiving space 33 as shown in Fig. 4.

Likewise, the second segment 28 is formed to include a complementary finger-receiving space 39 as shown in Fig. 3. The finger-receiving space 39 is formed between the circumferential end 37 and the finger 40 of the second segment 28 so that the circumferential end 37 and the finger 40 are spaced apart from one another. The finger 34 of the first segment 26 is sized and shaped to interlock with second segment 28 so that the finger 34 extends into and fills the finger-receiving space 39 as shown in Fig. 4.

The first segment 26 and the second segment 28 are constructed of ceramic matrix composite materials including reinforcement-preform fibers 42 suspended in a ceramics material matrix 44 as shown in Fig. 4. In one example, the blade track 20 is made from silicon-carbide fibers suspended in a silicon carbide matrix. The reinforcement-preform fibers 42 may include unidirectional or two-dimensional woven plies or may include a three-dimensional fiber architecture. The first segment and the second segment are partially densified with the ceramics material matrix 44 using chemical vapor infiltration (CVI) or another suitable method to partially rigidify the first and second segments 26, 28 prior to formation of the full-hoop blade track 20. The first and second segments 26, 28 are then interlocked to form interlocked joint 24 and fully densified with additional ceramics material matrix 44 using slurry-melt infiltration (SMI) or another suitable method to combine the first and second segments 26, 28 and form the full-hoop blade track 20.

The reinforcement-preform fibers 42 are oriented in the circumferential and axial directions to align the reinforcement-preform fibers 42 along planes formed by the interlocked joint 24. The interlocked joint 24 may have a lower ultimate strength than the reinforcement-preform fibers 42 suspended in the ceramics material matrix 44. Any failures, such as cracks, for example, in the full-hoop blade track 20 may occur along the interlocked joint 24 and would have to pass though the reinforcement-preform fibers 42 and the ceramics material matrix 44 due to the arrangement of the interlocked joint 24. As such, the full-hoop blade track 20 may be strengthened by the arrangement of the interlocked joint 24.

Another embodiment of a full-hoop blade track 220, in accordance with the present disclosure, is shown in Figs. 5-9. Blade track 220 includes a plurality of blade track segments 222 and a plurality of interlocked joints 224 as shown in Fig. 5. Blade track segments 222 are arcuate and are formed to extend circumferentially around the central axis A and are integrated with one another via matrix material so as to form a full-hoop. The interlocked joints 224 are formed to receive at least a portion of adjacent blade track segments 222 to couple blade track segments 222 together and form the full-hoop blade track 220.

As shown in Fig. 6, the blade track 220 includes a first blade track segment 226 and a second blade track segment 228. The first segment 226 and the second segment 228 are made from ceramic matrix composite materials and are shaped to extend at least partway around central axis A. The first segment 226 and the second segment 228 are sized and shaped to interlock with one another and form the interlocked joint 224 as suggested in Fig. 6 and shown in Figs. 7 and 8.

The first segment 226 and the second segment 228 interlock and form the interlocked joint 224 to block movement of the first segment 226 and the second segment 228 in circumferential, axial, and radial directions relative to one another. The first segment 226 includes a band 230, a finger support 232, a first attachment finger 234, and a second attachment finger 235 as shown in Fig. 6. The band 230 extends partway around the central axis A and interfaces with turbine blades (not shown) rotating about central axis A. The finger support 232 is coupled to a circumferential end 231 of the band and extends in the circumferential direction toward the second segment 228. The first finger 234 and the second finger 235 are coupled to the finger support 232 and extend in the axial direction.

The second segment 228 includes a band 236, a finger support 238, a first attachment finger 240, and a second attachment finger 241 as shown in Fig. 6. The band 236 extends partway around the central axis A and interfaces with turbine blades (not shown) rotating about central axis A. The finger support 238 is coupled to a circumferential end 237 of the band and extends in the circumferential direction toward the first segment 226. The first finger 240 and second finger 241 are coupled to the finger support 232 and extend in the axial direction opposite the first finger 234 and second finger 235 of the first segment 226.

The first and second segments 226, 228 may be manufactured with respective bands 230, 236, finger supports 232, 238, and fingers 234, 235, 240, 241 or the bands 230, 236, finger supports 232, 238, and fingers 234, 235, 240, 241 may be machined into the first and second segments 226, 228. Each band 230, 236 and finger support 232, 238 has a thickness t₁ that is continuous across the blade track 20 as shown in Fig. 6. Each finger 34, 35, 40, 41 has thickness t₂ that is smaller than the thickness t₁. In one example, the thickness t₂ is half of the thickness t₁. However, the fingers 34, 35, 40, 41 may have different thicknesses from one another.

The first segment 226 complements the second segment 228 so that the first and second segments 226, 228 combine and interlock to block movement of the first and second segments 226, 228 in the circumferential, axial, and radial directions relative to one another. The first segment 226 is formed to include a first finger-receiving space 242 and a second finger-receiving space 244 as shown in Fig. 6. The first finger-receiving space 242 is formed between the circumferential end 231 and the second finger 235 of the first segment 226 so that the circumferential end 231 and the second finger 235 are spaced apart from one another. The second finger 241 of the second segment 228 is sized and shaped to extend into and fill the first finger-receiving space 242 of the first segment 226 as shown in Fig. 7. The second finger-receiving space 244 is formed adjacent to the first finger 234 and above the second finger 235 and is spaced apart from the circumferential end 231 of the first segment 226. The first finger 240 of the second segment 228 is sized and shaped to extend into and fill the second finger-receiving space 244 of the first segment 226.

Likewise, the second segment 228 is formed to include a complementary first finger-receiving space 246 and a complementary second finger-receiving space 248 as shown in Fig. 6. The first finger-receiving space 246 is formed between the circumferential end 237 and the first finger 240 of the second segment 228 so that the circumferential end 237 and the first finger 240 are spaced apart from one another. The second finger 235 of the first segment 226 is sized and shaped to extend into and fill the first finger-receiving space 246 as shown in Fig. 7. The second finger-receiving space 248 is formed adjacent to the first finger 240 and above the second finger 241 and is spaced apart from the circumferential end 237 of the second segment 228. The first finger 234 of the first segment 226 is sized and shaped to extend into and fill the second finger-receiving space 248 of the second segment 228.

The first segment 226 and the second segment 228 are constructed of ceramic matrix composite materials including reinforcement-preform fibers 250 suspended in a ceramics material matrix 252 as shown in Fig. 7. In one example, the blade track 220 is made from silicon-carbide fibers suspended in a silicon carbide matrix. The reinforcement-preform fibers 250 may include unidirectional or two-dimensional woven or braided plies or may include a three-dimensional fiber architecture. The first segment 226 and the second segment 226 are partially densified with the ceramics material matrix 252 using chemical vapor infiltration (CVI) or another suitable method to partially rigidify the first and second segments 226, 228 prior to formation of the full-hoop blade track 220. The first and second segments 226, 228 are then interlocked to form interlocked joint 224 and are fully densified with additional ceramic material matrix 252 using slurry-melt infiltration (SMI) or another suitable method to combine the first and second segments 226, 228 and form the full-hoop blade track 220.

The reinforcement-preform fibers 250 are oriented in the circumferential and axial directions to align the reinforcement-preform fibers 250 along planes formed by the interlocked joint 224. The interlocked joint 224 has a lower ultimate strength than the reinforcement-preform fibers 250 suspended in the ceramics material matrix 252. Any failures, such as cracks, for example, in the full-hoop blade track 220 may occur along the interlocked joint 224 and will have to pass though the reinforcement-preform fibers 250 and the ceramics material matrix 252 due to the arrangement of the interlocked joint 224. As such, the full-hoop blade track 220 is strengthened by the arrangement of the interlocked joint 224.

The blade track 220 may further include at least one radial reinforcement pin 254 as shown in Fig. 7 or at least one axial reinforcement pin 256 as shown in Fig. 8. The reinforcement pins 254, 256 aid in blocking movement of the first and second segments 226, 228 in circumferential, axial and radial directions relative to one another.

Illustratively, the blade track 220 includes two radial reinforcement pins 256 that interconnect the first segment 226 and the second segment 228 as shown in Fig. 7. However, any suitable number of radial reinforcement pins 256 may be used. In one example, one of the radial reinforcement pins 256 extends from the first finger 240 of the second segment 228 to the second finger 235 of the first segment 226. The opposite radial reinforcement pin 256 extends from the first finger 234 of the first segment 226 to the second finger 241 of the second segment 228.

Illustratively, the blade track 220 includes two axial reinforcement pins 258 that interconnect the first segment 226 and the second segment 228 as shown in Fig. 8. However, any suitable number of axial reinforcement pins 258 may be used. In one example, one of the axial reinforcement pins 258 extends from the first finger 234 of the first segment 226 to the finger support 238 of the second segment 228. The opposite axial reinforcement pin 258 extends from the first finger 240 of the second segment 228 to the finger support 232 of the first segment 226.

Another embodiment of a blade-track 320, in accordance with the present disclosure, is shown in Fig. 9. The blade track 320 includes a first blade track segment 326 and a second blade track segment 328. The first segment 326 and the second segment 328 are made from ceramic matrix composite materials and are shaped to extend at least partway around central axis A. The first segment 326 and the second segment 328 are sized and shaped to interlock with one another and form an interlocked joint 324 as suggested in Fig. 9.

The first segment 326 is similar to first segment 226 of blade track 220 and includes a band 330, a finger support 332, a first finger 334, and a second finger 335 as shown in Fig. 9. Additionally, the second segment 328 is similar to the second segment 228 of blade track 220 and includes a band 336, a finger support 338, a first finger 340, and a second finger 341. However, the first finger 334 of the first segment 326 and the second finger 341 of the second segment 328 include a locking feature 360.

The locking feature 360 includes an attachment rib 362 coupled to the first finger 334 of the first segment 326 and an attachment slot 364 formed in the second finger 341 of the second segment 328 that complements the attachment rib 362. When the first segment 326 and the second segment 328 are interlocked, the attachment rib 362 extends into the attachment slot 364 to block axial movement of the first and second segments 326, 328 relative to one another.

Illustratively, the first segment 326 and the second segment 328 are made from ceramic matrix composite materials such as, for example, a ceramics-material matrix suspended in silicon-carbide fibers. The first and second segments 326, 328 are partially densified via chemical vapor infiltration (CVI) prior to being interlocked. Once interlocked, the first and second segments 326, 328 are slurry-melt infiltrated (SMI) to rigidify the blade track 320.

In illustrative embodiments, the single piece, full hoop, CMC, blade track embodied here may have a simple cross section that is cross keyed into the case. The single piece may eliminate all the intersegment gaps in the other configurations therefore eliminating potential leakage paths between the secondary air system and the hot flow path gases. This may also reduce the number of sealing components over the typical metallic configuration. The CMC lends itself to this configuration since it may not require the cooling air of a typical metallic component. Additionally, the lower thermal expansion characteristics of the ceramic matrix composites may be used to better match the rotor growth between specific conditions (namely cruise and max take off). In this way it can help control of the tip clearance to the blades.

In illustrative embodiments, scaling the hoop to the size of larger engine applications may present challenges to manufacturing. The size of hoop that may go into large engines may end up being large when compared to typical manufacturing equipment and may be a challenge to manufacture. The CMC manufacturing process may thus impose limits on the size of components. The different steps in the manufacturing process may have different limits. This disclosure may capture a way to make a single hoop by joining smaller arc segments with different joint geometries within the disclosed manufacturing process. The smaller arc segments may be at least partially densified (CVI). Then the arc segments may be tooled together and the full hoop component may be fully densified. The joining may be done with typical manufacturing methods (SMI).

Illustratively, the first embodiment may depict a mechanical interlock between the arc segments. Machining the edge of the arc segments may be reasonable with the geometry as shown. The arc segments in this embodiment may be made from multiple layup options including unidirectional plies, 2D woven, or 3D architecture. Allowing the laminate to have fibers oriented in the hoop direction and in the axial direction may put fibers in the typical crack plane. In other words, if a crack is generated in the joint gap along any straight edge of this geometry, the failure plane may require the crack to propagate through fibers with a higher ultimate strength than the matrix/joint material.

Illustratively, the second and third embodiments herein each have arc segments with multiple interlocking fingers that slide together. These joints may be configured such that the only direction which the joint can come apart without breaking fiber is opposite of how it was assembled. These joints may provide an extra degree of constraint relative to the first embodiment in that radial movement is no longer possible without breaking fibers. Additionally pins could be added to further strengthen the joint.

In illustrative embodiments, the system may snap together. Joints according to the present disclosure not be used on a hoop design but, when use in a hoop design, they may provide a built in locking feature that, once joined thru the SMI process may limit the part from coming apart in the direction it was assembled.

It is contemplated that joints according to the present disclosure may be incorporated into other ceramic matrix composite components. For example, joints like those described herein may be used to join tiles in a combustion liner and/or panels in an exhaust heat shield. Such other components may comprise ceramic matrix composite materials designed for high temperature use in combustors or exhaust systems.

While the disclosure has been illustrated and described in detail in the foregoing drawings and description, the same is to be considered as exemplary and not restrictive in character, it being understood that only illustrative embodiments thereof have been shown and described.

## Claims

1. A blade track (20, 220, 320) for use in a gas turbine engine (10), the blade track (20, 220, 320) comprising:
a first segment (26, 226, 326) comprising ceramic-matrix composite materials, the first segment (26, 226, 326) including a first band (30, 230, 330) shaped to extend part-way around a central axis, a first finger support (32, 232, 332) that extends partway around the central axis from a circumferential end (31, 231) of the first band (30, 230, 330), and a first attachment finger (34, 234, 240, 334, 340) that extends from an end of the first finger support (32, 232, 332), and
a second segment (28, 228, 328) comprising ceramic-matrix composite materials, the second segment (28, 228, 328) including a band (36, 236, 336) shaped to extend part-way around the central axis a finger support (38, 238, 338) that extends partway around the central axis from a circumferential end (37, 237) of the band (36, 236, 336), and a second attachment finger (40, 235, 241, 335, 341) that extends from an end of the finger support (38, 238, 338), **characterised in that** the first attachment finger (34, 234, 240, 334, 340) extends from the first finger support (32, 232, 332) in an axial direction and the second attachment finger (40, 235, 241) extends from the second finger support (38, 238, 338) in an axial direction opposite the first attachment finger (34, 234, 240, 334, 340),
the first attachment finger (34, 234, 240, 334, 340) and the second attachment finger (40, 235, 241) combine to provide an interlocked joint between the first segment (26, 226, 326) and the second segment (28, 228, 328),
the first band (30, 230, 330), the first finger support (32, 232, 332), and the first finger (34, 234, 240, 334, 340) form a first finger-receiving space (33) between the circumferential end (31, 231) of the first band (30, 230, 330) and the first finger (34, 234, 240, 334, 340), and
the second band (36, 236, 336), the second finger support (38, 238, 338) and the second finger (40, 235, 241, 335, 341) form a second finger-receiving space (39) between the circumferential end (37, 237) of the second band (36, 236, 336) and the second finger, and the first finger (34, 234, 240, 334, 340) extends into the second finger-receiving space (39) formed in the second segment (28, 228, 328) and the second finger (40, 235, 241, 335, 341) extends into the first finger-receiving space (33) formed in the first segment (26, 226, 326).

2. The blade track (20, 220, 320) of claim 1, wherein the first finger support (32, 232, 332) extends from the circumferential end (31, 231) of the first band (30, 230, 330) and the second finger support (38, 238, 338) extends from the circumferential end (37, 237) of the second band (36, 236, 336) opposite the first finger support (32, 232, 332).

3. The blade track (20, 220, 320) of any of claims 1 to 2 wherein first band (30, 230, 330) and the second band (36, 236, 336) have a thickness that is about equal to a thickness of the first finger (34, 234, 240, 334, 340) and the second finger (40, 235, 241, 335, 341).

4. The blade track (20, 220, 320) of any of claims 1 to 3, wherein the first segment (26, 226, 326) further includes a third attachment finger that extends from the first finger support (32, 232, 332) in the axial direction and the first and third fingers cooperate with the first finger support (32, 232, 332) to form a first finger-receiving space and a second finger-receiving space, and wherein the first attachment finger (34, 234, 240, 334, 340) is positioned radially below the first finger-receiving space and is spaced apart circumferentially from the circumferential end (31, 231) of the first band (30, 230, 330) and the third attachment finger is positioned radially above the third finger-receiving space and is adjacent the circumferential end (31, 231) of the first band (30, 230, 330).

5. The blade track (20, 220, 320) of any of claims 1 to 4, wherein the second segment (28, 228, 328) further includes a fourth attachment finger that extends from the second finger support (38, 238, 338) in the axial direction and the second and fourth fingers cooperate with the second finger support (38, 238, 338) to form a third finger-receiving space and a fourth finger-receiving space.

6. The blade track (20, 220, 320) of any of claims 1 to 5, wherein the second attachment finger (40, 235, 241) is positioned radially below the third finger-receiving space and is spaced apart circumferentially from the circumferential end (37, 237) of the second band (36, 236, 336) and the fourth attachment finger is positioned radially above the fourth finger-receiving space and is adjacent the circumferential end (37, 237) of the second band (36, 236, 336).

7. The blade track (20, 220, 320) of any of claims 1 to 6, wherein the first segment (26, 226, 326) is configured to bond to the second segment (28, 228, 328) such that the first attachment finger (34, 234, 240, 334, 340) extends into the fourth finger-receiving space, the second attachment extends into the second finger-receiving space, the third attachment finger extends into the third finger-receiving space, and the fourth attachment finger extends into the first finger-receiving space, wherein the first band (30, 230, 330) and the second band (36, 236, 336) have a first thickness and each of the fingers has a second thickness and the second thickness is less than the first thickness, and wherein the second thickness is about half of the second thickness.

8. The blade track (20, 220, 320) of any of claims 1 to 7, further comprising at least one mount pin that extends through the first and second attachment fingers, wherein the at least one mount pin includes a first mount pin that extends in the radial direction from the first attachment finger (34, 234, 240, 334, 340) into the fourth attachment finger and a second mount pin that extends in the radial direction from the second attachment finger (40, 235, 241) into the third attachment finger.

9. The blade track (20, 220, 320) of any of claims 1 to 8, wherein the at least one mount pin includes a first mount pin that extends in the axial direction from the first finger support (32, 232, 332) to the second finger support (38, 238, 338) through one of the first and fourth attachment fingers and a second mount pin that extends in the axial direction from the first finger support (32, 232, 332) to the second finger support (38, 238, 338) through one of the second and the third attachment fingers.

10. The blade track (20, 220, 320) of any of claims 1 to 9, wherein the ceramic matrix composite materials includes reinforcement-preform fibers suspended in a ceramics material matrix and the reinforcement-preform fibers are oriented primarily in the circumferential and axial directions.

11. A method of making the blade track (20, 220, 320) according to any one of the preceding claims, the method comprising:
providing a first blade track segment (26, 226, 326) having a band (30, 230, 330), a finger support (32, 232, 332) and a finger (34, 234, 240, 334, 340) and a second blade track segment (28, 228, 328) having a band (36, 236, 336), a finger support (38, 238, 338) and a finger (40, 235, 241, 335, 341),
chemical vapor infiltrating the first blade track segment (26, 226, 326) and the second blade track segment (28, 228, 328) to partially densify the first blade track segment (26, 226, 326) and the second blade track segment (28, 228, 328),
assembling the blade track (20, 220, 320) by inserting the first finger (34, 234, 240, 334, 340) formed on the first blade track segment (26, 226, 326) into a second finger-receiving space (39) formed in the second blade track segment (28, 228, 328) and inserting the second finger (40, 235, 241, 335, 341) formed on the second blade track segment (28, 228, 328) into a first finger-receiving space (33) formed in the first blade track segment (26, 226, 326) to interlock the first blade track segment (26, 226, 326) and the second blade track segment (28, 228, 328), and
slurry melt infiltrating the first blade track segment (26, 226, 326) and the second blade track segment (28, 228, 328) to bond the first blade track segment (26, 226, 326) and the second blade track segment (28, 228, 328).

12. The method of claim 11, the method further comprises machining the finger supports (32, 38, 232, 238, 332, 338) and the fingers (34, 40, 234, 235, 240, 241, 334, 335, 340, 341) into the first blade track segment (26, 226, 326) and the second blade track segment (28, 228, 328) to form the finger-receiving spaces (33, 39) in the first and second blade track segments (26, 28, 226, 228, 326, 328).

## Patentansprüche

1. Klingenbahn (20, 220, 320) zur Verwendung in einem Gasturbinentriebwerk (10), wobei die Klingenbahn (20, 220, 320) Folgendes umfasst:
ein erstes Segment (26, 226, 326), das Keramikmatrixverbundmaterialien umfasst, wobei das erste Segment (26, 226, 326) ein erstes Band (30, 230, 330), das geformt ist, um sich teilweise um eine zentrale Achse zu erstrecken, eine erste Fingerstütze (32, 232, 332), die sich teilweise um die zentrale Achse von einem umlaufenden Ende (31, 231) des ersten Bandes (30, 230, 330) erstreckt, und einen ersten Anbringungsfinger (34, 234, 240, 334, 340) beinhaltet, der sich von einem Ende der ersten Fingerstütze (32, 232, 332) erstreckt, und
ein zweites Segment (28, 228, 328), das Keramikmatrixverbundmaterialien umfasst, wobei das zweite Segment (28, 228, 328) ein Band (36, 236, 336), das geformt ist, um sich teilweise um die zentrale Achse zu erstrecken, eine Fingerstütze (38, 238, 338), die sich teilweise um die zentrale Achse von einem umlaufenden Ende (37, 237) des Bandes (36, 236, 336) erstreckt, und einen zweiten Anbringungsfinger (40, 235, 241, 335, 341) beinhaltet, der sich von einem Ende der Fingerstütze (38, 238, 338) erstreckt,
**dadurch gekennzeichnet, dass** sich der erste Anbringungsfinger (34, 234, 240, 334, 340) von der ersten Fingerstütze (32, 232, 332) in einer axialen Richtung erstreckt und sich der zweite Anbringungsfinger (40, 235, 241) von der zweiten Fingerstütze (38, 238, 338) in einer axialen Richtung entgegengesetzt zu dem ersten Anbringungsfinger (34, 234, 240, 334, 340) erstreckt,
wobei der erste Anbringungsfinger (34, 234, 240, 334, 340) und der zweite Anbringungsfinger (40, 235, 241) kombiniert werden, um eine ineinandergreifende Verbindung zwischen dem ersten Segment (26, 226, 326) und dem zweiten Segment (28, 228, 328) bereitzustellen,
wobei das erste Band (30, 230, 330), die erste Fingerstütze (32, 232, 332) und der erste Finger (34, 234, 240, 334, 340) einen ersten Fingeraufnahmeraum (33) zwischen dem umlaufenden Ende (31, 231) des ersten Bandes (30, 230, 330) und dem ersten Finger (34, 234, 240, 334, 340) bilden, und
wobei das zweite Band (36, 236, 336), die zweite Fingerstütze (38, 238, 338) und der zweite Finger (40, 235, 241, 335, 341) einen zweiten Fingeraufnahmeraum (39) zwischen dem umlaufenden Ende (37, 237) des zweiten Bandes (36, 236, 336) und dem zweiten Finger bilden, und sich der erste Finger (34, 234, 240, 334, 340) in den zweiten Fingeraufnahmeraum (39) erstreckt, der in dem zweiten Segment (28, 228, 328) gebildet ist, und sich der zweite Finger (40, 235, 241, 335, 341) in den ersten Fingeraufnahmeraum (33) erstreckt, der in dem ersten Segment (26, 226, 326) gebildet ist.

2. Klingenbahn (20, 220, 320) nach Anspruch 1, wobei sich die erste Fingerstütze (32, 232, 332) von dem umlaufenden Ende (31, 231) des ersten Bandes (30, 230, 330) erstreckt und sich die zweite Fingerstütze (38, 238, 338) von dem umlaufenden Ende (37, 237) des zweiten Bandes (36, 236, 336) entgegengesetzt zu der ersten Fingerstütze (32, 232, 332) erstreckt.

3. Klingenbahn (20, 220, 320) nach einem der Ansprüche 1 bis 2, wobei erstes Band (30, 230, 330) und das zweite Band (36, 236, 336) eine Dicke aufweisen, die etwa gleich einer Dicke des ersten Fingers (34, 234, 240, 334, 340) und des zweiten Fingers (40, 235, 241, 335, 341) ist.

4. Klingenbahn (20, 220, 320) nach einem der Ansprüche 1 bis 3, wobei das erste Segment (26, 226, 326) ferner einen dritten Anbringungsfinger beinhaltet, der sich von der ersten Fingerstütze (32, 232, 332) in der axialen Richtung erstreckt, und der erste und der dritte Finger mit der ersten Fingerstütze (32, 232, 332) kooperieren, um einen ersten Fingeraufnahmeraum und einen zweiten Fingeraufnahmeraum zu bilden, und wobei der erste Anbringungsfinger (34, 234, 240, 334, 340) radial unter dem ersten Fingeraufnahmeraum positioniert ist und umlaufend von dem umlaufenden Ende (31, 231) des ersten Bandes (30, 230, 330) beabstandet ist und der dritte Anbringungsfinger radial über dem dritten Fingeraufnahmeraum positioniert ist und benachbart zu dem umlaufenden Ende (31, 231) des ersten Bandes (30, 230, 330) ist.

5. Klingenbahn (20, 220, 320) nach einem der Ansprüche 1 bis 4, wobei das zweite Segment (28, 228, 328) ferner einen vierten Anbringungsfinger beinhaltet, der sich von der zweiten Fingerstütze (38, 238, 338) in der axialen Richtung erstreckt, und der zweite und der vierte Finger mit der zweiten Fingerstütze (38, 238, 338) kooperieren, um einen dritten Fingeraufnahmeraum und einen vierten Fingeraufnahmeraum zu bilden.

6. Klingenbahn (20, 220, 320) nach einem der Ansprüche 1 bis 5, wobei der zweite Anbringungsfinger (40, 235, 241) radial unter dem dritten Fingeraufnahmeraum positioniert ist und umlaufend von dem umlaufenden Ende (37, 237) des zweiten Bandes (36, 236, 336) beabstandet ist und der vierte Anbringungsfinger radial über dem vierten Fingeraufnahmeraum positioniert ist und benachbart zu dem umlaufenden Ende (37, 237) des zweiten Bandes (36, 236, 336) ist.

7. Klingenbahn (20, 220, 320) nach einem der Ansprüche 1 bis 6, wobei das erste Segment (26, 226, 326) konfiguriert ist, um an das zweite Segment (28, 228, 328) zu binden, sodass sich der erste Anbringungsfinger (34, 234, 240, 334, 340) in den vierten Fingeraufnahmeraum erstreckt, sich die zweite Anbringung in den zweiten Fingeraufnahmeraum erstreckt, sich der dritte Anbringungsfinger in den dritten Fingeraufnahmeraum erstreckt und sich der vierte Anbringungsfinger in den ersten Fingeraufnahmeraum erstreckt, wobei das erste Band (30, 230, 330) und das zweite Band (36, 236, 336) eine erste Dicke aufweisen und jeder der Finger eine zweite Dicke aufweist und die zweite Dicke weniger als die erste Dicke ist, und wobei die zweite Dicke etwa die Hälfte der zweiten Dicke ist.

8. Klingenbahn (20, 220, 320) nach einem der Ansprüche 1 bis 7, ferner umfassend zumindest einen Montagestift, der sich durch den ersten und den zweiten Anbringungsfinger erstreckt, wobei der zumindest eine Montagestift einen ersten Montagestift, der sich in der radialen Richtung von dem ersten Anbringungsfinger (34, 234, 240, 334, 340) in den vierten Anbringungsfinger erstreckt, und einen zweiten Montagestift beinhaltet, der sich in der radialen Richtung von dem zweiten Anbringungsfinger (40, 235, 241) in den dritten Anbringungsfinger erstreckt.

9. Klingenbahn (20, 220, 320) nach einem der Ansprüche 1 bis 8, wobei der zumindest eine Montagestift einen ersten Montagestift, der sich in der axialen Richtung von der ersten Fingerstütze (32, 232, 332) zu der zweiten Fingerstütze (38, 238, 338) durch einen von dem ersten und dem vierten Anbringungsfinger erstreckt, und einen zweiten Montagestift beinhaltet, der sich in der axialen Richtung von der ersten Fingerstütze (32, 232, 332) zu der zweiten Fingerstütze (38, 238, 338) durch einen von dem zweiten und dem dritten Anbringungsfinger erstreckt.

10. Klingenbahn (20, 220, 320) nach einem der Ansprüche 1 bis 9, wobei die Keramikmatrixverbundmaterialien Verstärkungsvorformfasern beinhalten, die in einer Keramikmaterialmatrix suspendiert sind und die Verstärkungsvorformfasern primär in der umlaufenden und axialen Richtung ausgerichtet sind.

11. Verfahren zum Herstellen der Klingenbahn (20, 220, 320) nach einem der vorhergehenden Ansprüche, wobei das Verfahren Folgendes umfasst:
Bereitstellen eines ersten Klingenbahnsegments (26, 226, 326), das ein Band (30, 230, 330), eine Fingerstütze (32, 232, 332) und einen Finger (34, 234, 240, 334, 340) aufweist, und eines zweiten Klingenbahnsegments (28, 228, 328), das ein Band (36, 236, 336), eine Fingerstütze (38, 238, 338) und einen Finger (40, 235, 241, 335, 341) aufweist,
chemisches Dampfinfiltrieren des ersten Klingenbahnsegments (26, 226, 326) und des zweiten Klingenbahnsegments (28, 228, 328), um das erste Klingenbahnsegment (26, 226, 326) und das zweite Klingenbahnsegment (28, 228, 328) partiell zu verdichten,
Zusammenbauen der Klingenbahn (20, 220, 320), indem der erste Finger (34, 234, 240, 334, 340), der auf dem ersten Klingenbahnsegment (26, 226, 326) gebildet ist, in einen zweiten Fingeraufnahmeraum (39) eingeführt wird, der in dem zweiten Klingenbahnsegment (28, 228, 328) gebildet ist, und der zweite Finger (40, 235, 241, 335, 341), der auf dem zweiten Klingenbahnsegment (28, 228, 328) gebildet ist, in einen ersten Fingeraufnahmeraum (33) eingeführt wird, der in dem ersten Klingenbahnsegment (26, 226, 326) gebildet ist, um das erste Klingenbahnsegment (26, 226, 326) und das zweite Klingenbahnsegment (28, 228, 328) ineinandergreifen zu lassen, und
Aufschlämmungsinfiltrieren des ersten Klingenbahnsegments (26, 226, 326) und des zweiten Klingenbahnsegments (28, 228, 328), um das erste Klingenbahnsegment (26, 226, 326) und das zweite Klingenbahnsegment (28, 228, 328) zu verbinden.

12. Verfahren nach Anspruch 11, wobei das Verfahren ferner das Bearbeiten der Fingerstützen (32, 38, 232, 238, 332, 338) und der Finger (34, 40, 234, 235, 240, 241, 334, 335, 340, 341) zu dem ersten Klingenbahnsegment (26, 226, 326) und dem zweiten Klingenbahnsegment (28, 228, 328) umfasst, um die Fingeraufnahmeräume (33, 39) in dem ersten und dem zweiten Klingenbahnsegment (26, 28, 226, 228, 326, 328) zu bilden.

## Revendications

1. Piste d'aube (20, 220, 320) destinée à être utilisée dans un moteur à turbine à gaz (10), la piste d'aube (20, 220, 320) comprenant :
un premier segment (26, 226, 326) comprenant des matériaux composites à matrice céramique, le premier segment (26, 226, 326) comprenant une première bande (30, 230, 330) façonnée pour s'étendre en partie autour d'un axe central, un premier support de doigt (32, 232, 332) qui s'étend en partie autour de l'axe central à partir d'une extrémité circonférentielle (31, 231) de la première bande (30, 230, 330), et un premier doigt de fixation (34, 234, 240, 334, 340) qui s'étend à partir d'une extrémité du premier support de doigt (32, 232, 332), et un second segment (28, 228, 328) comprenant des matériaux composites à matrice céramique, le second segment (28, 228, 328) comprenant une bande (36, 236, 336) façonnée pour s'étendre en partie autour de l'axe central un support de doigt (38, 238, 338) qui s'étend en partie autour de l'axe central à partir d'une extrémité circonférentielle (37, 237) de la bande (36, 236, 336), et un second doigt de fixation (40, 235, 241, 335, 341) qui s'étend à partir d'une extrémité du support de doigt (38, 238, 338),
**caractérisé en ce que** le premier doigt de fixation (34, 234, 240, 334, 340) s'étend à partir du premier support de doigt (32, 232, 332) dans une direction axiale et le deuxième doigt de fixation (40, 235, 241) s'étend à partir du second support de doigt (38, 238, 338) dans une direction axiale opposée au premier doigt de fixation (34, 234, 240, 334, 340),
le premier doigt de fixation (34, 234, 240, 334, 340) et le deuxième doigt de fixation (40, 235, 241) se combinant pour fournir un joint verrouillé entre le premier segment (26, 226, 326) et le second segment (28, 228, 328), la première bande (30, 230, 330), le premier support de doigt (32, 232, 332) et le premier doigt (34, 234, 240, 334, 340) forment un premier espace de réception de doigt (33) entre l'extrémité circonférentielle (31, 231) de la première bande (30, 230, 330) et le premier doigt (34, 234, 240, 334, 340), et
la seconde bande (36, 236, 336), le second support de doigt (38, 238, 338) et le deuxième doigt (40, 235, 241, 335, 341) formant un deuxième espace de réception de doigt (39) entre l'extrémité circonférentielle (37, 237) de la seconde bande (36, 236, 336) et le deuxième doigt, et le premier doigt (34, 234, 240, 334, 340) s'étend dans le deuxième espace de réception de doigt (39) formé dans le second segment (28, 228, 328) et le deuxième doigt (40, 235, 241, 335, 341) s'étendant dans le premier espace de réception de doigt (33) formé dans le premier segment (26, 226, 326).

2. Piste d'aube (20, 220, 320) selon la revendication 1, ledit premier support de doigt (32, 232, 332) s'étendant à partir de l'extrémité circonférentielle (31, 231) de la première bande (30, 230, 330) et ledit second support de doigt (38, 238, 338) s'étendant à partir de l'extrémité circonférentielle (37, 237) de la seconde bande (36, 236, 336) opposée au premier support de doigt (32, 232, 332).

3. Piste d'aube (20, 220, 320) selon l'une quelconque des revendications 1 à 2, ladite première bande (30, 230, 330) et ladite seconde bande (36, 236, 336) possédant une épaisseur qui est environ égale à une épaisseur du premier doigt (34, 234, 240, 334, 340) et du deuxième doigt (40, 235, 241, 335, 341).

4. Piste d'aube (20, 220, 320) selon l'une quelconque des revendications 1 à 3, ledit premier segment (26, 226, 326) comprenant en outre un troisième doigt de fixation qui s'étend à partir du premier support de doigt (32, 232, 332) dans la direction axiale et lesdits premier et troisième doigts coopérant avec le premier support de doigt (32, 232, 332) pour former un premier espace de réception de doigt et un deuxième espace de réception de doigt, et ledit premier doigt de fixation (34, 234, 240, 334, 340) étant positionné radialement sous le premier espace de réception de doigt et étant espacé circonférentiellement de l'extrémité circonférentielle (31, 231) de la première bande (30, 230, 330) et ledit troisième doigt de fixation étant positionné radialement au-dessus du troisième espace de réception de doigt et étant adjacent à l'extrémité circonférentielle (31, 231) de la première bande (30, 230, 330).

5. Piste d'aube (20, 220, 320) selon l'une quelconque des revendications 1 à 4, ledit second segment (28, 228, 328) comprenant en outre un quatrième doigt de fixation qui s'étend à partir du deuxième support de doigt (38, 238, 338) dans la direction axiale et lesdits deuxième et quatrième doigts coopérant avec le second support de doigt (38, 238, 338) pour former un troisième espace de réception de doigt et un quatrième espace de réception de doigt.

6. Piste d'aube (20, 220, 320) selon l'une quelconque des revendications 1 à 5, ledit deuxième doigt de fixation (40, 235, 241) étant positionné radialement sous le troisième espace de réception de doigt et étant espacé circonférentiellement de l'extrémité circonférentielle (37, 237) de la seconde bande (36, 236, 336) et ledit quatrième doigt de fixation étant positionné radialement au-dessus du quatrième espace de réception de doigt et étant adjacent à l'extrémité circonférentielle (37, 237) de la seconde bande (36, 236, 336).

7. Piste d'aube (20, 220, 320) selon l'une quelconque des revendications 1 à 6, ledit premier segment (26, 226, 326) étant configuré pour se lier au second segment (28, 228, 328) de sorte que le premier doigt de fixation (34, 234, 240, 334, 340) s'étende dans le quatrième espace de réception de doigt, la deuxième fixation s'étende dans le deuxième espace de réception de doigt, le troisième doigt de fixation s'étende dans le troisième espace de réception de doigt, et le quatrième doigt de fixation s'étende dans le premier espace de réception de doigt, ladite première bande (30, 230, 330) et ladite seconde bande (36, 236, 336) possédant une première épaisseur et chacun des doigts possédant une seconde épaisseur et ladite seconde épaisseur étant inférieure à la première épaisseur, et ladite seconde épaisseur étant environ la moitié de la seconde épaisseur.

8. Piste d'aube (20, 220, 320) selon l'une quelconque des revendications 1 à 7, comprenant en outre
au moins une broche de montage qui s'étend à travers les premier et deuxième doigts de fixation, ladite au moins une broche de montage comprenant une première broche de montage qui s'étend dans la direction radiale à partir du premier doigt de fixation (34, 234, 240, 334, 340) dans le quatrième doigt de fixation et une seconde broche de montage qui s'étend dans la direction radiale à partir du deuxième doigt de fixation (40, 235, 241) dans le troisième doigt de fixation.

9. Piste d'aube (20, 220, 320) selon l'une quelconque des revendications 1 à 8, ladite au moins une broche de montage comprenant une première broche de montage qui s'étend dans la direction axiale à partir du premier support de doigt (32, 232, 332) jusqu'au second support de doigt (38, 238, 338) à travers l'un des premier et quatrième doigts de fixation et une seconde broche de montage qui s'étend dans la direction axiale à partir du premier support de doigt (32, 232, 332) jusqu'au second support de doigt (38, 238, 338) par l'un des deuxième et troisième doigts de fixation.

10. Piste d'aube (20, 220, 320) selon l'une quelconque des revendications 1 à 9, lesdits matériaux composites à matrice céramique comprenant des fibres de préforme de renforcement suspendues dans une matrice de matériau céramique et lesdites fibres de préforme de renforcement étant orientées principalement dans les directions circonférentielle et axiale.

11. Procédé de fabrication de la piste d'aube (20, 220, 320) selon l'une quelconque des revendications précédentes, le procédé comprenant :
la fourniture d'un premier segment (26, 226, 326) de piste d'aube possédant une bande (30, 230, 330), un support de doigt (32, 232, 332) et un doigt (34, 234, 240, 334, 340) et un second segment (28, 228, 328) de piste d'aube possédant une bande (36, 236, 336), un support de doigt (38, 238, 338) et un doigt (40, 235, 241, 335, 341),
une vapeur chimique infiltrant le premier segment (26, 226, 326) de piste d'aube et le second segment (28, 228, 328) de piste d'aube pour densifier partiellement le premier segment (26, 226, 326) de piste d'aube et le second segment (28, 228, 328) de piste d'aube,
l'assemblage de la piste d'aube (20,220,320) en insérant le premier doigt (34, 234, 240, 334, 340) formé sur le premier segment (26, 226, 326) de piste d'aube dans un deuxième espace de réception de doigt (39)
formé dans le second segment (28, 228, 328) de piste d'aube et l'insertion du deuxième doigt (40, 235, 241, 335, 341) formé sur le second segment (28, 228, 328) de piste d'aube dans un premier espace de réception de doigt (33) formé dans le premier segment (26, 226, 326) de piste d'aube pour verrouiller le premier segment (26, 226, 326) de piste d'aube et le second segment (28, 228, 328) de piste d'aube, et
l'infiltration de suspension épaisse fondue dans le premier segment (26, 226, 326) de piste d'aube et le second segment (28, 228, 328) de piste d'aube pour lier le premier segment (26, 226, 326) de piste d'aube et le second segment (28, 228, 328) de piste d'aube.

12. Procédé selon la revendication 11,
le procédé comprend en outre l'usinage des supports de doigt (32, 38, 232, 238, 332, 338) et des doigts (34, 40, 234, 235, 240, 241, 334, 335, 340, 341) dans le premier segment (26, 226, 326) de piste d'aube et le second segment (28, 228, 328) de piste d'aube pour former les espaces de réception de doigt (33, 39) dans les premier et second segments (26, 28, 226, 228, 326, 328) de piste d'aube.
